# EUROPEAN PATENT SPECIFICATION

(11) **EP 2 011 823 B1**
(45) Date of publication and mention of the grant of the patent: **10.08.2011**
(21) Application number: 07741999.2
(22) Date of filing: 19.04.2007
(51) Int. Cl.: C08L 23/16, C08K 3/00, C08K 5/00, F16J 15/10

(54) **EPDM COMPOSITION**
EPDM-ZUSAMMENSETZUNG
COMPOSITION D'EPDM

(30) Priority: 26.04.2006 JP 2006122674
(43) Date of publication of application: 07.01.2009
(73) Proprietor: NOK Corporation, Minato-ku Tokyo 105-8585 (JP)
(72) Inventor: YOKOTA, Atsushi, Fujisawa-shi, Kanagawa 251-0042 (JP); KOJIMA, Yoshifumi, Fujisawa-shi, Kanagawa 251-0042 (JP)
(74) Representative: Ziebig, Marlene
(86) International application number: PCT/JP2007/058563
(87) International publication number: WO 2007/125819

(56) References cited:
- JP-A- 2000 344 987
- JP-A- 2003 096 257
- JP-A- 2003 301 072
- JP-A- 2003 335 908
- JP-A- 2004 036 630
- US-A- 5 407 989
- US-A- 5 690 768
- US-A1- 2005 067 796

## Description

### Technical Field

The present invention relates to an EPDM composition and, more particularly, to an EPDM composition preferably usable as molding material for gaskets which prevent moisture or dust from intruding and are attached to electronic equipment (e.g. precision equipment such as HDD) that requires low outgassing property of the gaskets.

### Background Art

The art of using EPDM compositions as molding material for gaskets attached to electronic equipment such as precision equipment, e. g. HDD has already been known, as seen in the patent document 1, for example, wherein an EPDM composition which does not include plasticizer such as process oil and is preferably usable as molding material for gaskets for hard disc drives among EPDM polymers is recommended under the notion that an EPDM material can be very promising for gaskets for hard disc drives if its low outgassing property (which means that the quantity of gas released from organic materials, etc. is small) and low gas permeability (low water vapor permeability)can be sufficiently secured. Insufficient low outgassing property will oxidize, rust or corrode metal parts, etc., or deteriorate elements in an electronic device, having a bad influence upon the product and causing a problem of lowering the reliability of the electronic device. In addition, insufficient low gas permeability (low water vapor permeability) will trigger defects such as short circuit of wiring due to moisture permeation, leading to depriving a hard disc drive, for example, of its functions, or produce a contaminated layer on the disc due to silicon gas permeation, causing a risk of disabling the disc from reading in data.
Patent document1: Japanese Unexamined Patent Application Publication No. 2005-255924

Though the art in the patent document 1 avoids blending of plasticizer, being afraid of generation of outgassing and development of gas permeability (water vapor permeability), it cannot be a fundamental solution because even if a polymer which generates little outgassing is used, the polymer contains hydrocarbon gas which is an element of outgassing. In addition, molecular chain scission through shearing during processing, etc. may generate low molecular weight elements which is a cause of outgassing generation. Furthermore, requirement of low hardness as gaskets will restrict filler recipe ratio.

Since the art specified in the abovementioned patent document 1 presumes the blending which relies on the polymer properties, there remain such problems yet to be solved as limitation of the kinds of applicable polymers, high hydrocarbon content of a compound and restriction of recipe ratio of filler for securing low hardness.

Thus, as a result of continued study to solve the above retained problems the inventor of the present invention has reached the present invention which does not require restriction of plasticizer charging and, quite contrarily, allows mass blending of filler by blending a mass of plasticizer, having found that reduction in weight fraction of hydrocarbon in the EPDM composition and subsequent reduction in outgassing can be realized.

That is to say, an object of the present invention is to provide an EPDM composition from which molding material excellent in low outgassing property and low gas permeability (low water vapor permeability) can be obtained even if the EPDM composition contains a mass of plasticizer blended in.

Other objects of the present invention will be apparent from the following description:

### Disclosure of Invention

The objects of the present invention will be solved by the following inventions:

The invention as claimed in claim 1 is an EPDM composition comprising;
A) ethylene-propylene-nonconjugated diene terpolymer(EPDM polymer)as main element,
B) plasticizer at 100 - 140 part by weight per the EPDM polymer of 100 part by weight,
C) thermal black as a filler at 200 - 400 part by weight per the EPDM polymer of 100 part by weight,
   and
D) vulcanizing agent at 1 - 10 part by weight per the EPDM polymer of 100 part by weight.

The invention as claimed in claim 2 is an EPDM composition according to Claim 1 , being used for gaskets attached to products which are outgassing-phobic and are mainly used in the electronic industry.

The invention as claimed in claim 3 is an EPDM composition according to Claim 2, being used for connector gaskets for hard disc.

The invention as claimed in claim 4 is a molding material which is made from cross-linking of the EPDM composition of Claim 1.

The invention as claimed in claim 5 is a molding material according to Claim 4, wherein the total quantity of outgassing from the molding material is 10µg/g or less.

The invention as claimed in claim 6 is a molding material according to claim 4 or 5, wherein the water vapor permeability coefficient is less than 1 x 10⁻³ (g·mm/cm² 24H) based on the moisture permeability test of the molding material.

### Effects of the Invention

The present invention can provide an EPDM composition excellent in low outgassing property and low gas permeability (low water vapor permeability) even if a mass of plasticizer is blended.

Also, a gasket made from the EPDM composition of the present invention is suitable for making hard discs, etc. dust-proof since it has been given by its raw material such properties as sealing performance, low gas permeability (low water vapor permeability), low outgassing property, etc. In addition, a gasket made from the EPDM composition of the present invention can prevent the penetration of moisture and silicon gas into the hard disc drive ;therefore, its performance and quality as gasket are higher than those of conventional gaskets.

### The Best Mode for Carrying Out the Invention

### <EPDM>

The EPDM polymer used in the present invention consists chiefly of ethylene-propylene-nonconjugated diene terpolymer (EPDM polymer) and, more preferably, of the one whose ethylene content is 45 - 80wt%.

Dicyclopentadiene (DCPD), 1, 4-hexadiene (1, 4-HD), dicyclooctadiene (DCOD), methylene-norbornene, ethylidene-norbornene (ENB) are used as nonconjugated diene.

Either high polymer (EPDM polymer)alone or a blend of high polymer (EPDM polymer) and low viscosity polymer(EPDM polymer) may be used as an EPDM polymer in the present invention.

Commercial EPDM polymers usable in the present invention include the "EPT" series which are products of Mitsui Chemicals, Inc., for example.

### <Plasticizer>

Plasticizers used for ordinary rubbers or thermoplastic elastomers may be blended in the EPDM polymer of the present invention. The plasticizers include, for example, petroleum-derived softeners such as process oils, lubricants and paraffinic oils, softeners derived from fatty oil, such as castor oil, linseed oil, rapeseed oil and coconut oil, esters plasticizers such as dibutyl phthalate, dioctyl phthalate, dioctyl adipate and dioctyl sebacate, and hydrocarbon oligomer, and heat-resistant plasticizers excellent especially in low outgassing property include fatty acid ester and refined paraffinic process oils, of which the high-molecular weight process oil PW380 (a product of Idemitsu Kosan) with molecular weight (Mw)of 500 or more, etc. is preferable.

In the present invention the recipe ratio of plasticizer is within the range of 50 - 200 part by weight and, preferably, within the range of 100 - 140 part by weight per EPDM polymer of 100 part by weight.

### <Fillers>

Carbon black blended usually in rubber, inorganic filler, organic filler, etc. are used as filler to be blended in the EPDM composition of the present invention. Carbon blacks include furnace blacks such as HAF carbon black, MAF carbon black, FEF carbon black, SRF carbon black and GPF carbon black, and thermal blacks such as fine thermal (FT) carbon black and medium thermal (MT) carbon black, of which thermal blacks are preferable and above all the thermal blacks with oil absorption of 0.25ml/g or more are preferable. MT carbon black is most preferable among all other thermal blacks.

In the present invention the recipe ratio of filler is within the range of 100 - 450 part by weight and, preferably, within the range of 200 - 400 part by weight per EPDM polymer of 100 part by weight.

In the present invention the recipe ratio of filler and plasticizer is very beneficial in exhibiting their effect, as exemplified by the fact that reduction in outgassing quantity cannot be realized if plasticizer is not included and filler ratio is less than 100 part by weight (comparative example 1). If plasticizer is blended in the range of 50 - 200 part by weight and filler ratio is less than 100 part by weight, the hardness is insufficient and neither sealing performance, low gas permeability (low water vapor permeability) nor low outgassing property can take effect (comparative example 2); however, if the filler ratio is within the range of 100 - 450 part by weight, hardness, sealing performance, low gas permeability (low water vapor permeability) and low outgassing property become better (practical example 1, 2). In addition, if filler ratio is more than 450 part by weight, gaskets become harder than preferable and worse in sealing performance even if plasticizer is blended in 50 - 200 part by weight (comparative example 3). Furthermore, if plasticizer ratio is less than 50 part by weight, and when filler is blended in less than 100 part by weight, both of low gas permeability (low water vapor permeability) and low outgassing property become worse (comparative example 4), gaskets become harder than preferable and worse in sealing performance even if filler ratio is within the range of 100 - 450 part by weight (comparative example 5).

<Vulcanizing agent (cross-linking agent)> Preferable organic peroxides such as dicumyl peroxide, di-tert-butylperoxide, 2, 5-dimethyl-2, 5-di(tert-butyl peroxy) hexane, etc. are chiefly preferable as vulcanizing agent to be blended in the EPDM composition of the present invention.

In the present invention the appropriate recipe ratio of vulcanizing agents is within the range of 1 - 10 part by weight per EPDM polymer of 100 part by weight for cross-linkage to take sufficient effect.

### <Process of making crosslinked rubber>

The abovementioned components are kneaded with a kneading machine such as a roll, a Banbury mixer, a Brabender, a kneader, a high-shearing type mixer, a uniaxial extruder and a biaxial extruder. At the time of kneading, required components including crosslinking agents, coagents, antioxidants such as amine-ketone series or imidazoles e.g. 2, 2, 4-trimethyl-1, 2-dihydroquinoline polymer or acid acceptors such as zinc oxide and hydrotalcite are added at the same time and mixed and kneaded.

Then, the mixed and kneaded components
are molded into desired shapes with a publicly known method such as, for example, injection molding, extrusion molding, compression molding, FIPG method dispenser molding, etc.

In case of peroxide crosslinking, the shaped components are heated at about 150 - 220°C for about 1 - 30 minutes. If necessary, a secondary crosslinking is provided at about 100 - 200°C for about 0.5 - 15 hours.

In this way, gasket molding material are required to have been cross-linked by the method of chemical cross-linking or physical cross-linking using electron beam, ultraviolet, etc.

### <Properties of cross-linked rubber>

The molding material (cross-linked rubber) thus cross-linked and adjusted are preferably of hardness in the range of 20 - 70° (JIS durometer type A) in order to realize the sealing property in case of application of them to gasket material. Preferable hardness is in the range of 30 - 60°.

Total amount of outgassing is preferably 10µg/g or less. The figure of the outgassing amount is measured by means of measuring the amount (µg/g) of outgassing which comes out of a test piece through thermal extraction for the duration of 3 hours at 85°C. The total amount of outgassing is preferably less than 6µg/g.

In addition, water vapor permeability coefficient, which is an important property in preventing the inside of electronic equipment from rusting, etc., is obtained based on a moisture permeability test. In the present invention the water vapor permeability coefficient is preferably less than 1x10⁻³ (g·mm/cm² 24H). In a moisture permeability test, distilled water is put in a cylindrical SUS container together with a test piece pinched and fixed with a hollow stainless steel lid to obtain the water vapor permeability coefficient (g·mm/cm² 24H) from the data in 100 hours at 70°C.

The cross-linked rubber made from the EPDM composition of the present invention is preferably excellent in sealing property, which is preferably leakproof since a gasket molded and integrated into a cover is attached to an actual machine for a leak test and heat-treated at 80°C for 168 hours, then, cooled down to room temperature and given a positive pressure of 5kPa from the inside of the testing machine for 30 straight seconds, and checked for leak after a lapse of 15 seconds, and leak will occur if compression set of the gasket molding material is inferior or the gasket shape is defective.

### Examples

The following practical examples will exemplify the effect of the present invention:
Practical example 1

| | |
|---|---|
| EPDM polymer ("EPT3095", a product of Mitsui Chemicals) | |
| | 100 part by weight |
| Carbon black ("Thermal MT-CB", a product of Huber) | |
| | 200 part by weight |
| Paraffin oil ("Process oil PW380", a product of Idemitsu Kosan) | |
| | 120 part by weight |
| Zinc oxide (a product of Miho) | 3 part by weight |
| Antioxidant ("NOCRAC MB", a product of Ouchishinko Chemical | |
| Industrial Co., Ltd.) | 1 part by weight |
| TAIC (a product of Nihon Kasei Co., Ltd.) | 1 part by weight |
| Dicumyl peroxide | 3 part by weight |

The components are kneaded by a kneader manufactured by Moriyama and formed into un-vulcanized dough; then, cross-linked by the use of a compression molding machine in a condition of the temperature of 180°C and the compression duration of 6 minutes, and further, heat-treated in a heating oven at 150°C for 5 hours to be formed into cross-linked rubber.

### <Evaluation method>

### (1) Hardness

Three test sheets of each 2mm thickness are lapped and measured according to JIS K6253.

### (2) Sealing property test

A gasket molded and integrated into a cover was attached to an actual machine for a leak test and heat-treated at 80°C for 168 hours, then, cooled down to room temperature and given a positive pressure of 5kPa from the inside of the testing machine for 30 straight seconds, and checked for leak after a lapse of 15 seconds.

A judgment was made in this test according to the following evaluation criteria:
- Without leak:: o
- With leak:: x

If compression set of gasket molding material is inferior or a gasket shape is defective, leak will occur.

### (3) Moisture permeability test

10cc of distilled water was put in a cylindrical SUS container (with 27mm diameter and 50mm depth) together with a test piece, which has been adjusted to have the diameter of 30mm and the thickness of 1mm, pinched and fixed with a hollow stainless steel lid (with the inside diameter of 27mm at the opening) to obtain the water vapor permeability coefficient (g·mm/cm² 24H) from the date in 100 hours at 70°C.

A judgment was made in this test according to the following evaluation criteria:
Water vapor permeability coefficient: less than 1x10⁻³ (g·mm/cm² 24H): o
Water vapor permeability coefficient: 1x10⁻³ (g·mm/cm² 24H) or more: x

### (4) Outgassing property test

The amount (pg/g) of outgassing which comes out of a strip test piece with the dimensions of 50x3x2mm through thermal extraction for the duration of 3 hours at 85°C was measured.

A judgment was made in this test according to the following evaluation criteria:
- Outgassing quantity:less than 6(µg/g):: o
- Outgassing quantity:6(µg/g) or more :: x

Those which involve the outgassing quantity of 6(µg/g) or more are not preferable for connector gaskets applicable to hard discs.

### <Evaluation results>

The above evaluation method brought the results as shown in Table 1:

### Practical example 2 and comparative examples 1-5

Table 1 shows the results of the evaluation of a cross-linked rubber which has been manufactured and evaluated in the same manner as for the practical example 1 except for the recipe ratio which have been changed as shown in Table 1.

### [Table 1]

**Table 1.**

| | Practical Example | | Comparative Example | | | | |
|---|---|---|---|---|---|---|---|
| | 1 | 2 | 1 | 2 | 3 | 4 | 5 |
| EPDM | 100 | 100 | 100 | 100 | 100 | 100 | 100 |
| carbon black | 200 | 300 | 50 | 50 | 500 | 50 | 200 |
| paraffinic oil | 120 | 120 | 0 | 120 | 120 | 20 | 20 |
| zinc oxide | 3 | 3 | 3 | 3 | 3 | 3 | 3 |
| antioxide | 1 | 1 | 1 | 1 | 1 | 1 | 1 |
| TAIC | 1 | 1 | 1 | 1 | 1 | 1 | 1 |
| dicmyl peroxide | 3 | 3 | 3 | 3 | 3 | 3 | 3 |

| <Evaluation results> | | | | | | | |
|---|---|---|---|---|---|---|---|
| Hardness | 40 | 55 | 60 | 25 | 75 | 50 | 85 |
| Sealing performance | ○ | ○ | ○ | × | × | ○ | × |
| Water vapor permeability coefficient | ○ | ○ | × | × | ○ | × | ○ |
| Total amount of outgassing | ○ | ○ | × | × | ○ | × | ○ |

## Claims

1. An EPDM composition comprising;
A) an EPDM polymer which is an ethylene-propylene-nonconjugated diene terpolymer,
B) a plasticizer at 100 - 140 part by weight per the EPDM polymer of 100 part by weight,
C) thermal black as a filler at 200 - 400 part by weight per the EPDM polymer of
100 part by weight,
and
D) vulcanizing agent at 1 - 10 part by weight per the EPDM polymer of 100 part by weight.

2. Use of an EPDM composition according to Claim 1 for gaskets attached to products which are outgassing-phobic, preferably used in the electronic industry.

3. Use of an EPDM composition according to Claim 2 for connector gaskets for hard disc.

4. A molding material which is made from cross-linking of the EPDM composition of Claim 1.

5. A molding material according to Claim 4, wherein the total quantity of outgassing from the molding material is 10µg/g or less.

6. A molding material according to claim 4 or 5, wherein the water vapor permeability coefficient is less than 1 x 10⁻³ (g·mm/cm² 24H) based on the moisture permeability test of the molding material.

## Patentansprüche

1. EPDM-Zusammensetzung, umfassend:
A) ein EPDM-Polymer, bei dem es sich um ein Terpolymer aus Ethylen/Propylen/konjugiertem Dien handelt,
B) einen Weichmacher mit 100 bis 140 Gewichtsteilen pro 100 Gewichtsteile EPDM-Polymer;
C) thermischen Ruß als Füllstoff mit 200 bis 400 Gewichtsteilen pro 100 Gewichtsteile EPDM-Polymer;
und
D) Vulkanisierungsmittel mit 1 bis 10 Gewichtsteilen pro 100 Gewichtsteile EPDM-Polymer.

2. Verwendung einer EPDM-Zusammensetzung nach Anspruch 1 für Dichtungen, die an Produkte mit geringer Ausgasung angebracht sind, vorzugsweise solche zur Verwendung in der Elektronikindustrie.

3. Verwendung einer EPDM-Zusammensetzung nach Anspruch 2 für Anschlussdichtungen für Festplatten.

4. Formmasse, hergestellt durch Vernetzung der EPDM-Zusammensetzung nach Anspruch 1.

5. Formmasse nach Anspruch 4, wobei sich die Gesamtmenge der Ausgasung aus der Formmasse auf 10 µg/g oder weniger beläuft.

6. Formmasse nach Anspruch 4 oder 5, wobei der Wasserdampfdurchlässigkeitskoeffizient auf der Grundlage eines Feuchtigkeitsdurchlässigkeitstests der Formmasse kleiner als 1-10⁻³ g·mm/cm²·24h ist.

## Revendications

1. Composition d'EPDM comprenant:
A) un polymère EPDM qui est un terpolymère d'éthylène-propylène-diène non conjugué,
B) un plastifiant à raison de 100 - 140 parties en poids pour 100 parties en poids du polymère EPDM
C) du noir de carbone en tant que matière de charge à raison de 200 - 400 parties en poids pour 100 parties en poids du polymère EPDM
et
D) un agent de vulcanisation à raison de 1 - 10 parties en poids pour 100 parties en poids du polymère EPDM.

2. Utilisation d'une composition d'EPDM selon la revendication 1 pour des joints fixés à des produits qui sont sensibles au dégazage, de préférence utilisés dans l'industrie électronique.

3. Utilisation d'une composition d'EPDM selon la revendication 2 pour des joints de connecteur pour un disque dur.

4. Matériau de moulage qui est fabriqué à partir d'une réticulation de la composition d'EPDM selon la revendication 1.

5. Matériau de moulage selon la revendication 4, dans lequel la quantité totale de dégazage du matériau de moulage est de 10 µg/g ou moins.

6. Matériau de moulage selon la revendication 4 ou 5, dans lequel le coefficient de perméabilité à la vapeur d'eau est inférieur à 1 x 10⁻³ (g·mm/cm² 24 h), en se basant sur l'essai de perméabilité à l'humidité du matériau de moulage.
